# EUROPEAN PATENT APPLICATION

(11) **EP 4 821 989 A1**
(43) Date of publication of application: **14.10.2026**
(21) Application number: 24900234.6
(22) Date of filing: 29.08.2024
(51) Int. Cl.: C08L 101/00, C08K 3/013, C08K 3/04, C08K 3/22, C08K 3/28, C08L 83/05, C08L 83/07

(54) **THERMALLY CONDUCTIVE COMPOSITION**

(30) Priority: 04.12.2023 JP 2023204644; 31.01.2024 JP 2024013140
(71) Applicant: Momentive Performance Materials Inc., Niskayuna, NY 12309 (US)
(72) Inventor: KONDO, Takuya, Tokyo 107-6119 (JP); TAKAHASHI, Hideo, Tokyo 107-6119 (JP); HOSHINO, Chisato, Tokyo 107-6119 (JP); PERALA, Suresh Kumar, Telangana 505102 (IN); NAIK, Sandeep, Maharashtra 410206 (IN); DALAVOY, Tulika, Bangalore, Karnataka 560100 (IN); DOLAI, Sukanta, Bangalore, Karnataka 560100 (IN); DUTTA, Pranabesh, Bangalore, Karnataka 560100 (IN); PRASAD, Manish Chand, Bangalore, Karnataka 560068 (IN); LEE, Nicholas, Seoul 06608 (KR)
(74) Representative: Gille Hrabal Partnerschaftsgesellschaft mbB Patentanwälte
(86) International application number: PCT/JP2024/030965
(87) International publication number: WO 2025/120937

(57) **Abstract**

A composition comprising a polymer and at least one thermal conductivity enhancing agent is disclosed, the composition has a dispensability of more than 12 gms per minute as determined using automated dispenser Nordson EFD using 30 cc syringe with 2 mm opening at 90 psi and a thermal conductivity of more than12 W/mK as determined by the hot disk method or the ASTM D5470 method.

## Description

### FIELD OF INVENTION

The present invention relates to a composition comprising a polymer and at least one thermal conductivity enhancing agent, resulting in high thermal conductivity and high dispensability.

### BACKGROUND

With the development of electronic devices toward miniaturization and high density and integration, the heat generation of electronic devices is gradually increasing, and thermal failure becomes the primary problem hindering the performance, reliability, and life of electronic devices. Hence, efficient thermal management becomes the key to solving this challenge. Thermal interface materials (TIMs) are widely employed between the two solid contact surfaces of heat sources and heat sinks to increase heat removal for electronic devices. These materials come in variety of formats such as greases, gap-fillers, pre-cured gels, curable materials (1 or 2 parts), phase change materials, elastomeric pads, adhesives, thermal tapes, metal alloys and solders etc. The gap between two solid surfaces (chip and heat sink) is uneven, and otherwise filled with air which has poor thermal conductivity. This gap is filled with a thermal interface material to provide the heat conduction pathway. Depending on the requirement, multiple thermal interface materials may be used between different solid surfaces to provide continuous conductive pathways for heat removal.

The advent of 5G communications technology, in telecom space and internet of things (IoT) in consumer and industrial spaces will further elevate the performance requirement for TIMs. 5G and IoT devices (using 5G) work at higher frequencies, higher device densities, higher bandwidths, lower latency, small feature sizes and low power along with much higher reliability and availability requirements. These factors have made the heat removal requirement from electronic devices much more stringent and there is general trend in industry to move towards higher performance, i.e., higher thermal conductivity TIMs, for example going from low thermal conductivity of 3-5 W/mK to average of 6-10 W/mK and prompted for development of even higher thermal conductivities > 10 W/mK. The development of the next generations of integrated circuits (ICs), three-dimensional (3D) integration, and ultrafast high-power density communication devices makes the thermal management requirements extremely severe.

Conventional TIMs filled with thermally conductive particles require high-volume fractions v of filler (v > 50%) like alumina, ZnO to achieve thermal conductivity (TC) of the composite in the range of 1-5 W/mK. Many products also utilize metallic fillers like aluminum when electrical conductivity conditions are relaxed. However, to achieve high TC (>10 W/mK) additional fillers such as BN, AlN, diamond, SiC fillers and their combinations are disclosed in many patent applications. The advantage of these fillers is that they are electrically insulating and possess much higher thermal conductivities (high TC fillers). Apart from thermal conductivity, TIM formulations must demonstrate a range of other critical properties to be utilized in applications. These may include low thermal resistance, low volatiles, pump-out, bleed out, cracking, thermal stability, hardness, high dispensing flow-rate for application at defined viscosities, shear-rate, pump pressure etc. Stability of properties during in low-high temperature cycling/shock also needs to be shown by conducting testing up to 1000-2000 hrs. These properties are achieved by careful design of TIM formulation combining high filler compositional loadings with suitable polymer-resin-dispersing agent combinations as disclosed below.

JP7007161 B2 described a composition comprising diamond filler wherein the shape of the diamond filler is granular (non-spherical, more preferably polyhedral, more preferably hexahedron, octahedron, etc., and particularly preferably hexahedron) having between 10-18 facets and sphericity > 0.2. Diamond size is from 0.01-100 microns. The difference between the true specific gravity of the diamond and thermal conductive filler is 0.2 to 4 g/cm³. The ratio of the volume average particle size of the thermal conductive filler to the volume average particle diameter of the diamond is 0.01 to 0.5. Overall thermal conductivity shown is low < 10 W/mK. JP7084143 B2 described a heat dissipation composition, heat dissipation member, and filler aggregate for heat dissipation member. The composition contains diamond with multiple fillers showing greater than 10W (diamond >15%vol). Also mentions, total void volume (<3%), contact angle of the polymer matrix with respect to the thermally conductive filler containing the diamond particles (< 70°), and diamond particles have a surface oxygen content (>5%). JP2938428B2 describes heat-reducing grease comprising liquid silicones in combination with a thermally conductive inorganic filler like diamond and AlN having consistency in the range of 280 to 350 and thermal conductivity in the range of 2.5 to 4 W/mK. CN112226199B describes a curable ultrahigh thermal conductivity paste insulating composition containing a thermal conducting filler including diamond and a functional filler like ferric oxide and having thermal conductivity of 11.8 W/mK and dispensability of 33 g/min.

However, there is a scope for improving the dispensability and thermal conductivity of such compositions.

### SUMMARY

The present invention offers thermal conductivity > 12 W/mK, while maintaining good dispensability and meeting all the desired properties like low pump-out, low bleed out, cracking, low hardness buildup and reliability during low to high temperature cycling/shock (-40 C to 150 °C) up to 500-1000 hrs. The present invention incorporates diamond as the key filler into thermal conductive compositions.

The following presents a summary of this disclosure to provide a basic understanding of some aspects of the invention. This summary is intended to neither identify key or critical elements nor define any limitations of embodiments or claims. Furthermore, this summary may provide a simplified overview of some aspects that may be described in greater detail in other portions of this disclosure.

In one aspect, provided is a composition comprising a polymer and at least one thermal conductivity enhancing agent, wherein the composition has a dispensability of more than 12 g per minute as determined using automated dispenser Nordson EFD using 30 cc syringe with 2 mm opening at 90 psi and thermal conductivity of more than 12 W/mK as determined by the hot disk method according to ISO 22007-2 or the test method according to ASTM D5470.

In one embodiment, the polymer is a silicone polymer.

In one embodiment, the silicone polymer comprises
(i) an alkenyl-functionalized diorganopolysiloxane of formula (Ia)

   M¹ₐM²_{b}D¹_{c}D²_{d}T¹ₑT²_{f}Q_{g} (Ia)

   wherein:
   M¹ = R¹R²R³SiO_{1/2}
   M² = R⁴R⁵R⁶SiO_{1/2}
   D¹ = R⁷R⁸SiO_{2/2}
   D² = R⁹R¹⁰SiO_{2/2}
   T¹ = R¹¹SiO_{3/2}
   T² = R¹²SiO_{3/2}
   Q = SiO_{4/2}
   where R², R³, R⁴, R⁵, R⁶, R⁸, R⁹, R¹⁰, R¹² are each independently selected from an aliphatic, aromatic, or fluoro monovalent hydrocarbon groups having from 1 to 60 carbon atoms or alkoxy groups;
   R¹, R⁷, R¹¹ are each independently selected from an aliphatic, aromatic, or fluoro monovalent hydrocarbon having from 1 to 60 carbon atoms and containing at least one terminal olefin bond; and
   the subscripts a, b, c, d, e, f, and g are zero or a positive integer subject to the following limitations: 1≤a+b+c+d+e+f+g ≤6000, and
   a+c+e≥1;
   and
(ii) a hydrogen-functionalized organopolysiloxane of formula (Ib)

   M¹_{a'}M²_{b'}D¹_{c'}D²_{d'}T¹_{e'}T²_{f'}Q_{g'} (1b)

   wherein:
   M¹ = R¹³R¹⁴R¹⁵SiO_{1/2}
   M² = R¹⁶R¹⁷R¹⁸SiO_{1/2}
   D¹ = R¹⁹R²⁰SiO_{2/2}
   D² = R²¹R²²SiO_{2/2}
   T¹ = R²³SiO_{3/2}
   T² = R²⁴SiO_{3/2}
   Q = SiO_{4/2}
   where R¹⁴, R¹⁵, R¹⁶, R¹⁷, R¹⁸, R²⁰, R²¹, R²², R²⁴ are aliphatic, aromatic or fluoro monovalent hydrocarbon groups having from 1 to 60 carbon atoms;
   R¹³, R¹⁹, R²³ are hydrogen;
   the subscript a', b', c', d', e', f', and g' are zero or a positive integer subject to the following limitations: 1≤a'+b'+c'+d'+e'+f'+g' ≤6000, and a'+c'+e' ≥ 1;
   with the proviso that when a'+c'+e' =1 then a+c+e >1 and when a+c+e =1 then a'+c'+e' >1;
   or a crosslinked product of (i) and (ii)

In one embodiment, the composition comprises a first thermal conductivity enhancing agent and a second thermal conductivity enhancing agent.

In another embodiment, the first thermal conductivity enhancing agent is diamond. Preferably, the diamond is single crystal diamond.

In still another embodiment, the second thermal conductivity enhancing agent is selected from a group consisting of aluminum oxide, zinc oxide, boron nitride, SiC, and aluminum nitride.

In another embodiment the viscosity of the composition is more than 100 Pa·s measured at 23 °C with a B-type rotational viscometer, and obtain the value after 3 minutes at No. 7 rotor, 4 rpm.

In yet another embodiment, the polymer is present in an amount ranging from 1 to 6 wt% of the composition.

In another embodiment, the gradient of change in a thermal resistance value with respect to change in a thickness of the composition is 100 K mm²/W or less.

In another embodiment, the composition has a shore E hardness of 0 to 90.

In another embodiment, the composition has a bond line thickness (BLT) of 150 µm or more.

In another embodiment, the composition has a volume resistivity of 1 × 10¹⁰ Ω·cm or more.

In another embodiment, the composition has a dielectric strength of 5 kV/mm or more.

### [Brief description of drawing figures]

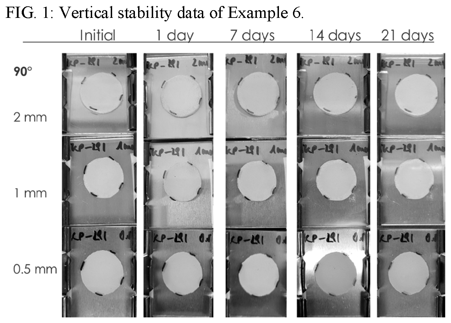

FIG. 1 shows vertical stability performance test data for Example 6.

### DETAILED DESCRIPTION

Reference will now be made to exemplary embodiments, examples of which are illustrated in the accompanying drawings. It is to be understood that other embodiments may be utilized, and structural and functional changes may be made. Moreover, features of the various embodiments may be combined or altered. As such, the following description is presented by way of illustration only and should not limit in any way the various alternatives and modifications that may be made to the illustrated embodiments. In this disclosure, numerous specific details provide a thorough understanding of the subject disclosure. It should be understood that aspects of this disclosure may be practiced with other embodiments not necessarily including all aspects described herein, etc.

As used herein, the words "example" and "exemplary" means an instance, or illustration. The words "example" or "exemplary" do not indicate a key or preferred aspect or embodiment. The word "or" is intended to be inclusive rather than exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

As used herein, the term "thermal conductivity enhancing agent" means a solid compound or a mixture of compounds that enhances the thermal conductivity of a composition. Examples of thermal conductivity enhancing agent include, but are not limited to, solid inorganic compounds such as boron nitride, aluminum nitride, aluminum oxide, zinc oxide, aluminum metal, silicon carbide, carbon based fillers like graphite and diamond, metal fillers like aluminum, silver or a mixture thereof.

As used herein, the term "pre-cured gel" or "cross-linked silicone gel" means a fluid-extended polymer system which may include a continuous polymeric phase or network, which may be chemically, e.g., ionically or covalently, or physically cross-linked, and an oil, such as a silicone or other oil, a plasticizer, unreacted monomer, or other fluid extender which swells or otherwise fills the interstices of the network. The cross-linking density of such network and the proportion of the extender can be controlled to tailor the modulus, i.e., softness, and other properties of the gel. The term "pre-cured gel" also should be understood to encompass materials which alternatively may be classified broadly as pseudogels or gel-like as having viscoelastic properties similar to gels, such has by having a "loose" cross-linking network formed by relatively long cross-link chains, but as, for example, lacking a fluid-extender.

The expression "monovalent hydrocarbon" means any hydrocarbon group from which one or more hydrogen atoms has been removed and is inclusive of alkyl, alkenyl, alkynyl, cyclic alkyl, cyclic alkenyl, cyclic alkynyl, aryl, aralkyl and arenyl and may contain heteroatoms.

The term "alkyl" means any monovalent, saturated straight, branched or cyclic hydrocarbon group; the term "alkenyl" means any monovalent straight, branched, or cyclic hydrocarbon group containing one or more carbon-carbon double bonds where the site of attachment of the group can be either at a carbon-carbon double bond or elsewhere therein; and, the term "alkynyl" means any monovalent straight, branched, or cyclic hydrocarbon group containing one or more carbon-carbon triple bonds and, optionally, one or more carbon-carbon double bonds, where the site of attachment of the group can be either at a carbon-carbon triple bond, a carbon-carbon double bond or elsewhere therein. Examples of alkyls include methyl, ethyl, propyl and isobutyl. Examples of alkenyls include vinyl, propenyl, allyl, methallyl, ethylidenyl norbornane, ethylidene norbornyl, ethylidenyl norbornene and ethylidene norbornenyl. Examples of alkynyls include acetylenyl, propargyl and methylacetylenyl.

The expressions "cyclic alkyl", "cyclic alkenyl", and "cyclic alkynyl" include bicyclic, tricyclic and higher cyclic structures as well as the aforementioned cyclic structures further substituted with alkyl, alkenyl, and/or alkynyl groups. Representative examples include norbornyl, norbornenyl, ethylnorbornyl, ethylnorbornenyl, cyclohexyl, ethylcyclohexyl, ethylcyclohexenyl, cyclohexylcyclohexyl and cyclododecatrienyl.

The term "aryl" means any monovalent aromatic hydrocarbon group; the term "aralkyl" means any alkyl group (as defined herein) in which one or more hydrogen atoms have been substituted by the same number of like and/or different aryl (as defined herein) groups; and, the term "arenyl" means any aryl group (as defined herein) in which one or more hydrogen atoms have been substituted by the same number of like and/or different alkyl groups (as defined herein). Examples of aryls include phenyl and naphthalenyl. Examples of aralkyls include benzyl and phenethyl. Examples of arenyls include tolyl and xylyl.

The present disclosure provides one-part thermal conductive grease composition, reworkable pre-cured thermal conductive gel composition and two-part thermal conductive compositions comprising cross-linked silicone gel, alkenyl-functionalized diorganopolysiloxane fluids, hydrogen-functionalized organopolysiloxane, alkoxy functionalized surface wetting agent (dispersing agent) or hydrolyzable organopolysiloxane, thermal conductive fillers, additives and pigments. By using dispersing agent and organofunctional silicone fluids, with diamond and other thermal conductive fillers, ultra-high thermal conductivity was achieved. Even though these thermal conductive compositions may consist of hard fillers like diamond and AlN fillers, they showed very stable dispensability over the period of time and showed remarkable thermal stability at very high temperature (150 °C) for more than 1000 h owing to not only the optimization of fillers and filler ratios but also optimization of composition of organofunctional silicone fluids along with dispersing agent.

In one-part pre-cured thermal conductive gel compositions, thermal conductivity >14 W/mK with dispensability >12 g/min was achieved, and hardness (shore E) was within 10 at 150 °C even after 1000 h of aging and showed stable dispensability.

In the two-part post curable (addition curable) thermal conductive compositions, thermal conductivity >15 W/mK with dispensability >13 g/min was achieved and also showed less hardness buildup at high temperature of 150 °C and showed stable dispensability after aging.

One-part thermal conductive grease compositions may also include additives. The additive used in the present disclosure can be selected from one of a pigment, a lubricant, a viscosity modifier, a heat stabilizer, a photostabiliser, an antioxidant, a flame retardant, an inhibitor, an adhesion promoter, or a combination of two or more thereof.

In the one part thermal conductive grease composition, thermal conductivity >12 W/mK with dispensability >19 g/min was achieved.

The combination of fillers is optimized to arrive at best combinations which can provide us with high TC as well as dispensable compositions. It may be noted that, as such any two or three or more fillers can be combined to arrive at a composition, but such an approach seldom works and results in powdery or low TC compositions. Only after doing DOE and optimization can we arrive at optimal filler combinations that enhance the filler packing, thus providing for high thermal conductivity while maintaining paste like rheology, viscosity and flow properties. The filler combination can be described as made up of 3 or more fillers - (C-I) the smallest fillers of D50 ~ 1 micron, which can be made up of alumina, ZnO, SiC, diamond, BN and/or aluminum nitride fillers or combination - these fillers even though they have large surface areas, they enhance the overall TC by building multitude of filler-polymer-dispersing agent contacts, along with filler-filler and filler-substrate contacts. They may also provide the desired lubrication and thixotropic effect for the composition. The next filler, (C-II) is the middle size fillers ~5-30 microns, which provide enhanced contacts and gap-filling between the large-fillers, these fillers are made up of alumina, diamond, BN or aluminum nitride powders or their combination. The third fillers, (C-III) is the largest filler type (> 30 microns), which provides the biggest crystal domain sizes to provide for high heat conductive path and thus enhanced thermal conductivity. For largest filler, intrinsically high TC materials like BN, cubic BN, SiC, diamond and AlN, which enhances the overall conductivity of the composition are utilized. As a result of careful experimental studies, we are demonstrating here, specific fillers and filler combinations, to be used as the heat conductive filler to achieve a heat conductive composition that is excellent in thermal conductivity (>12 W/mK), dispensability (>12 g/min), electrical insulation (volume resistivity >1 × 10¹⁰ Ω·cm), flexibility and moldability, and can be easily manufactured at low cost, and the present invention has been completed.

Herein, to achieve ultra-high thermal conductivity along with good and stable dispensability and good thermal stability, filler optimization was done using diamond and other thermal conductive fillers.

The disclosure may identify a number of different ranges for a component or components in the composition. It will be appreciated that the numerical values of the respective ranges can be combined to form new and non-specified ranges.

In one aspect, provided is a composition comprising a polymer and at least one thermal conductivity enhancing agent, wherein the composition has a dispensability of more than 12 g per minute as determined using automated dispenser Nordson EFD using 30 cc syringe with 2 mm opening at 90 psi and thermal conductivity of more than 12 W/mK as determined by the hot disk method according to ISO 22007-2 or the test method according to ASTM D5470.

In one embodiment, the polymer is a silicone polymer.

In one embodiment, the silicone polymer comprises
(i) an alkenyl-functionalized diorganopolysiloxane of formula (Ia)

   M¹ₐM²_{b}D¹_{c}D²_{d}T¹ₑT²_{f}Q_{g} (Ia)

   wherein:
   M¹ = R¹R²R³SiO_{1/2}
   M² = R⁴R⁵R⁶SiO_{1/2}
   D¹ = R⁷R⁸SiO_{2/2}
   D² = R⁹R¹⁰SiO_{2/2}
   T¹ = R¹¹SiO_{3/2}
   T² = R¹²SiO_{3/2}
   Q = SiO_{4/2}
   where R², R³, R⁴, R⁵, R⁶, R⁸, R⁹, R¹⁰, R¹² are each independently selected from an aliphatic, aromatic, or fluoro monovalent hydrocarbon groups having from 1 to 60 carbon atoms or alkoxy groups;
   R¹, R⁷, R¹¹ are each independently selected from an aliphatic, aromatic, or fluoro monovalent hydrocarbon having from 1 to 60 carbon atoms and containing at least one terminal olefin bond; and
   the subscripts a, b, c, d, e, f, and g are zero or a positive integer subject to the following limitations: 1≤a+b+c+d+e+f+g ≤6000, and a+c+e≥1;
   and
(ii) a hydrogen-functionalized organopolysiloxane of formula (Ib)

   M¹_{a'}M²_{b'}D¹_{c'}D²_{d'}T¹_{e'}T²_{f'}Q_{g'} (1b)

   wherein:
   M¹ = R¹³R¹⁴R¹⁵SiO_{1/2}
   M² = R¹⁶R¹⁷R¹⁸SiO_{1/2}
   D¹ = R¹⁹R²⁰SiO_{2/2}
   D² = R²¹R²²SiO_{2/2}
   T¹ = R²³SiO_{3/2}
   T² = R²⁴SiO_{3/2}
   Q = SiO_{4/2}
   where R¹⁴, R¹⁵, R¹⁶, R¹⁷, R¹⁸, R²⁰, R²¹, R²², R²⁴ are aliphatic, aromatic or fluoro monovalent hydrocarbon groups having from 1 to 60 carbon atoms;
   R¹³, R¹⁹, R²³ are hydrogen;
   the subscript a', b', c', d', e', f', and g' are zero or a positive integer subject to the following limitations: 1≤a'+b'+c'+d'+e'+f'+g' ≤6000, and a'+c'+e' ≥ 1;
   with the proviso that when a'+c'+e' =1 then a+c+e >1 and when a+c+e =1 then a'+c'+e' >1; or a crosslinked product of (i) and (ii).

The component (i) is an organopolysiloxane represented by formula (Ia) and having, in one molecule, at least two alkenyl groups bonded to silicon atoms. The viscosity of the component (i) at 25 °C may be in the range of 0.01 to 10 Pa·s, preferably 0.06 to 1 Pa·s. If the viscosity at 25 °C is below 0.01 Pa·s, the storage stability of the composition deteriorates, and if it exceeds 10 Pa·s, flowability cannot be maintained. The viscosity values mentioned above and elsewhere in the application are measured using a Brookfield rotary viscometer.

The organopolysiloxane is not particularly limited as far as it meets the aforementioned viscosity and alkenyl group content, and known organopolysiloxanes may be used. The molecular structure of the organopolysiloxane may be straight-chain, branched-chain, partially branched straight-chain, dendritic, or the like. Preferably, the structure is straight-chain or partially branched straight-chain. The component (i) may be a single polymer with such structure, a copolymer with such structure, or a mixture of two or more organopolysiloxanes having different viscosities.

Further, the component (i) may be used in combination with a mono alkenyl-terminated organopolysiloxane having one alkenyl group bonded to a silicon atom per molecule. The viscosity of this organopolysiloxane at 25 °C may range from 0.001 to 1 Pa·s, preferably 0.006 to 0.1 Pa·s. Combining this organopolysiloxane with the component (i), an organopolysiloxane having at least two alkenyl groups bonded to silicon atoms per molecule, improves fluidity and facilitates, in the case of cured products, achieving the necessary low hardness for thermal interface materials.

The component (ii) is an organohydrogen polysiloxane represented by formula (Ib) and having hydrogen atoms directly bonded to silicon atoms. Specifically, it is an organohydrogen polysiloxane having at least two hydrogen atoms directly bonded to silicon atoms (hydrosilyl groups) in one molecule, and functions as a crosslinking agent for the component (i). The hydrosilyl groups of the component (ii) and the alkenyl groups of the component (i) are added together by way of a hydrosilylation reaction promoted by a platinum-based metal catalyst, later described, resulting in a three-dimensional network structure including crosslinked structures. If the number of hydrosilyl groups is less than two in the component (ii), curing is not obtained.

The amount of addition of the component (ii) is such that the hydrosilyl groups of the component (ii) are 0.1 to 5.0 moles relative to one mole of alkenyl groups of the component (i), i.e., the molar quantity of hydrogen atoms directly bonded to silicon atoms is 0.1 to 5.0 times the molar quantity of alkenyl groups of the component (i), preferably 0.2 to 2.0 moles, and more preferably 0.3 to 1.0 moles. If the quantity of hydrosilyl groups of the component (ii) is less than 0.1 mole relative to one mole of alkenyl groups of the component (i), curing may not be obtained or the strength of the cured product may be insufficient, making it difficult to handle as a molded object. If it exceeds 5.0 moles, the flexibility of the cured product is lost, and the cured product becomes brittle.

In one embodiment, the composition comprises a first thermal conductivity enhancing agent and a second thermal conductivity enhancing agent.

In another embodiment, the first thermal conductivity enhancing agent is diamond.

In still another embodiment, the second thermal conductivity enhancing agent is selected from a group consisting of aluminum oxide, zinc oxide, boron nitride, SiC, and aluminum nitride.

In another embodiment the viscosity of the composition is more than 100 Pa·s. Viscosity was measured using a Brookfield viscometer in compliance with ASTMD2196, #7 rotor, 4 rpm, after 3 minutes.

In yet another embodiment, the polymer is present in an amount ranging from 1 to 6 wt% of the composition.

In another embodiment, the gradient of change in a thermal resistance value with respect to change in a thickness is 100 K mm²/W or less.

In another embodiment, the composition has a shore E hardness of 0 to 90.

In another embodiment, the composition has a bond line thickness of 150 µm or more when the composition is sandwiched between two 10 × 10 × 0.5 mm Si chips and the pressure is applied at 1 MPa for 30 seconds.

In another embodiment, the composition has a volume resistivity of 1 × 10¹⁰ Ω·cm or more at the condition of 500V, 1 mm thickness; measured in compliance with ASTMD257.

In another embodiment, the composition has a dielectric strength of 5 kV/mm or more; measured in compliance with ASTMD149.

It will be appreciated that the thermal conductivity enhancing agent may comprise a mixture of a single type of compound where the mixture includes compounds of different average particle size. In one embodiment, the thermal conductivity enhancing agent comprises aluminum nitride, boron nitride, SiC, and aluminum oxide.

The particle size of the thermal conductivity enhancing agent may be chosen as desired for a particular purpose or intended application. As used herein, "particle size" refers to a volume average particle size unless the context indicates otherwise. In embodiments, the thermal conductivity enhancing agent has an average particle size of from about 0.01 µm to about 500 µm; from about 0.1 to about 250 µm; from about 1 to about 100 µm; from about 5 to about 75 µm; even from about 10 to about 50 µm. It will be appreciated that the composition may comprise a combination of thermal conductivity enhancing agents of different average particle sizes. Such combinations may be chosen as desired for a particular purpose or intended application. In one embodiment, the composition comprises a first thermal conductivity enhancing agent having an average particle size from about 0.01 to less than 1 µm; a second thermal conductivity enhancing agent having an average particle size of about 1 µm to about 30 µm; and a third thermal conductivity enhancing agent having an average particle size of about 50 µm to about 200 µm. The first, second, and third thermal conductivity enhancing agents may be the same or different from one another in terms of the chemical makeup of the filler. Particle size can be determined by any suitable method. Average particle size is often provided or reported from the supplier of the material. The average particle size can be determined by measuring the particle size distribution by laser diffraction and scattering according to JIS R1629. In this study, the median diameter (D50) on a volume basis obtained from the measurement was used as the average particle diameter. The filler(s) may be present in an amount of from about 80 wt.% to about 99 wt.%, from about 82 wt.% to about 96 wt.%, or from about 85 wt.% to about 95 wt.% based on the total weight of the composition.

The cross-linked silicone gel may also be referred to herein as a pre-cured gel or a polymer gel. The cross-linked silicone gel is made by reacting the alkenyl-functionalized diorganopolysiloxane with hydrogen-functionalized organopolysiloxane. The reaction may be conducted via hydrosilylation reaction conditions using an appropriate catalyst. A conventional hydrosilylation catalyst are platinum-based catalysts (such as, but not limited to, Karstedt's catalyst). In one embodiment, the pre-cured gel can be made by reacting a linear vinyl capped polysiloxanes with pendent poly(hydrosiloxane) or poly(methylhydrosiloxane) copolymers (cross-linker) or a crosslinked MT or MQ resin containing Si-H reactive groups through Pt catalyzed hydrosilylation reaction. A similar gel network can also be achieved by reacting a pendant vinyl silicone polymer with an end capped poly(hydrosiloxane) or poly(methylhydrosiloxane) copolymers or a crosslinked MT or MQ resin containing Si-H reactive groups via Pt catalyzed hydrosilylation route. The effective Si-H/Si-alkenyl mole ratio [r] which will be made to react to form a Si-C linkage must satisfy r ≤ 0.3. The final "Gel Rheology" must satisfy the condition
a) $0.2 \leq G ′ \leq 1000 \left(Pa\right) ;$
b) $0.1 \leq G " / G ′ \leq 10 ;$ where the term G' represents the "storage shear modulus" of the final pre-cured gel composition to be used in the thermal interface material composition measured at T= 25°C under an oscillation frequency of 1 Hz or 6.28 rad/s by a stress or strain controlled rheometer, and the term G" represents the "loss shear modulus" of the final pre-cured gel composition to be used in thermal interface material composition measured at T= 25°C under an oscillation frequency of 1 Hz or 6.28 rad/s by a stress or strain-controlled rheometer. G'' and G' are collectively measured in the respective viscoelastic region.

The following examples are intended to illustrate aspects and embodiments of the present technology. All parts and percentages are by weight and all temperatures are in Celsius unless explicitly stated otherwise. All patents, other publications, and U.S. patent applications referred to in the instant application are incorporated herein by reference in their entireties.

### EXAMPLES

Steady shear viscosity and thixotropy were determined using Rheometer (DHR-3) TA Instruments Inc. with Parallel plate geometry (measuring geometry gap 300 µm).

Hardness test of cured (2-Part) compositions was conducted using ASTMD2240 Type durometer (Shore E).

Bulk thermal conductivity of the thermal conductive compositions were measured using hot disk instrument at 22 °C and also ASTM D5470 was complied with to measure the thermal resistance and thermal conductivity.

EFD's Optimum 30cc syringe having 2 mm opening was filled with sample and dispensing was made at 90 psi, using an automatic dispenser Nordson EFD, for measuring the dispensed volume per minute.

Bond line thickness (BLT) was determined by sandwiching the composition between two 10 × 10 × 0.5 mm Si chips and applying the pressure at 1 MPa for 30 seconds on Si chip.

Volume resistivity was measured in compliance with ASTMD257 and dielectric strength was measured in compliance with ASTMD149.

The vertical slippage test (vertical stability performance) was performed by placing 2 gm of composition between aluminum/alumina Q panel and glass plate of 5cm × 5cm dimension with spacer of 0.5, 1, 2 mm to form circle. The plates are clamped together with paper clip and placed in vertical position and are subjected to temp cycle or shock (-40 to 150 °C).

Crystallite size was measured by XRD using X-ray diffractometer system with copper target (Kα line) of wavelength 1.54 Å, accelerating voltage of 40 kV, tube current of 30 mA, scan speed of 4°/min with step width of 0.02°.

Surface oxygen content was measured by XPS using X-ray Photoelectron spectroscope with Al K alpha source, vacuum level of 2 × 10⁻⁹ Torr, hemispherical analyzer, dwell time of 0.7 sec, energy step of 1 eV and HR scan 0.1 eV.

Compositions were prepared according to the examples listed in Tables 1, 2 and 3.

Divinyl terminated organopolysiloxane (A-1a) has a viscosity of 0.1 Pa·s and represented by the following formula: 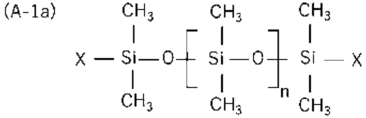 wherein each X is vinyl and n is 42.

Divinyl terminated organopolysiloxane (A-1b) has a viscosity of 0.03 Pa·s and represented by the following formula: 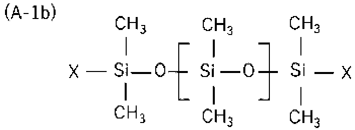 wherein each X is vinyl and n is 20.

Monovinyl terminated organopolysiloxane (A-2a) has a viscosity of 0.02 Pa·s and represented by the following formula: 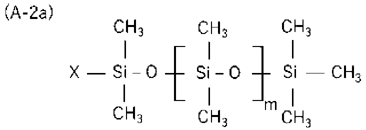 wherein X is vinyl and m is 30.

Monovinyl terminated organopolysiloxane (A-2b) has a viscosity of 0.01 Pa·s and represented by the following formula: 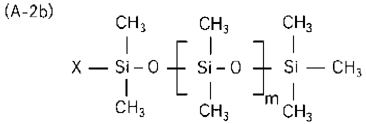 wherein X is vinyl and m is 20.

Crosslinker organohydrogenpolysiloxane (B-1) has the viscosity ranges from 0.01 to 0.1 Pa·s with Si-H content from 0.05 to 0.5 wt%, and a compound of the following formula having a viscosity of 0.02 Pa·s is used in Examples:

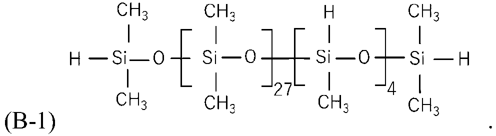

Synthesis of cross-linked silicone gel (X-1) of viscosity 11.6 Pas: Vinyl stopped PDMS (500 g, MW ~ 17280 g/mol, Vinyl meq ~0.115) along with Pt catalyst (2 wt. % Karstedt's catalyst, 10 ppm Pt) and inhibitor (Surfynol^{®} 61, 200 ppm) were charged to a double planetary mixer at room temperature and allowed to mix at room temperature for 30 minutes at 20 rpm. To the reaction mixture at 50 °C, silicone hydride (55.4 g, MW ~ 40802, Hydride meq ~0.1586) was added and continued the mixing for an additional 1 hour at 20 rpm. While the mixing continues at the same speed at 50 °C, the vacuum is applied for 60 minutes to remove the reaction inhibitor to form the gel network. The reaction temperature then increases to 90 °C and is continued till all the hydride gets consumed and a gel is being formed.

The pre-cured gel compositions were made in Thinky mixer. First, the specific amount of dispersing agent, vinyl-terminated PDMS fluids and gel were weighed in plastic container and mixed for 30 sec at 2000 rpm. To this mixture, diamond and other thermal conductive fillers with the variable particle size were added step wise and all the materials were mixed using Thinky mixer at 2000 rpm for 30 sec at each step. In each step, after mixing of 30 sec, the composition was hand mixed with broad blade spatula for 2 min. At the end, 1-2 times mixed for 30 sec at 2000 rpm to get the uniform paste.

2-part curable compositions were also made similar to pre-cured gel compositions. A part and B part were made separately and mixed equal amount and cured at 70 °C for 1 h.

Polycrystal irregular shape diamond was purchased either from HongXiang or from Hexanovation.

Aluminum nitride was purchased from Toyo Aluminium.

Nano Zinc oxide was procured from Zochem.
Polycrystal irregular shape diamond (C-1) with a volume-averaged particle size of 5.2 micron size, crystallite size of 428 Å and surface oxygen content of 8.1 %
Polycrystal irregular shape diamond (C-2) with a volume-averaged particle size of 89 micron size, crystallite size of 1070 Å and surface oxygen content of 6.9 %
Single crystal diamond (C-3) with a volume-averaged particle size of 165 micron size, crystallite size of 1206 Å and surface oxygen content of 13.5 %
Single crystal diamond with a volume-averaged particle size of 107 micron size (C-4), crystallite size of 905 Å and surface oxygen content of 16.7 %
Single crystal diamond with a volume-averaged particle size of 125 micron size (C-4a)
Aluminum nitride with volume average particle sizes of 1.2, 5, 20 micron size (C-5a, C-5b, C-5c respectively)
Nano zinc oxide (C-6) with volume average particle sizes of 0.16 micron size

(D-1) is a hydrolyzable organopolysiloxane (II-i) represented by a compound of the formula:

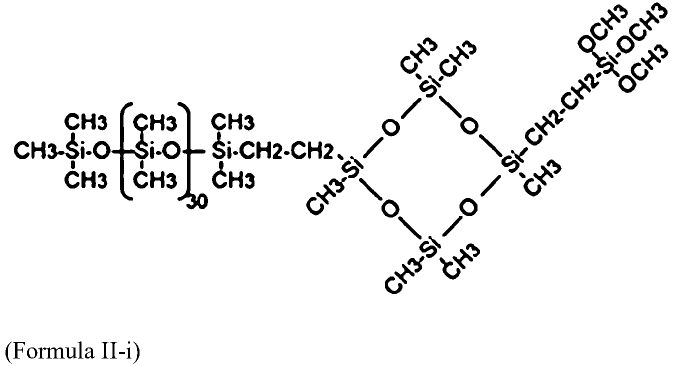

(D-2) is a hydrolysable polyorganosiloxane represented by a compound of the formula (II-ii):

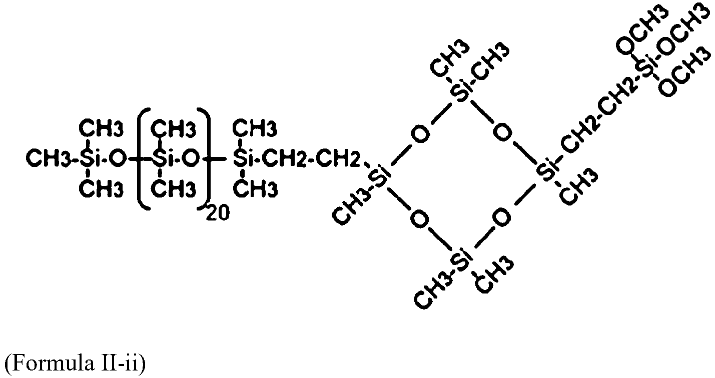

E-1 is a decyltrimethoxysilane used as an additive in the compositions.

Thermal conductive grease type compositions using diamonds along with other fillers:

**[Table 1]**

| | | **wt%** | | | | | |
|---|---|---|---|---|---|---|---|
| | | **CE-1** | **CE-2** | **Ex. 1** | **Ex.2** | **Ex. 3** | **Ex. 4** |
| Polysiloxane | A-1a | 0.06 | 0.15 | 0.06 | 0.06 | 0.15 | 1.6 |
| | A-2a | 0.9 | 2.7 | 0.92 | 0.99 | 2.7 | 1.8 |
| Thermal conductivity enhancing agent | C-1 | | | | | | 3.0 |
| | C-2 | 16 | 47.7 | | | | |
| | C-3 | | | 16 | 18.02 | 47.7 | 47.7 |
| | C-5a | 8 | 23.8 | 8 | 7.5 | 23.8 | 17.9 |
| | C-5b | | | | 3.32 | | |
| | C-5c | 8 | 23.8 | 8 | 6.33 | 23.8 | 20.9 |
| | C-6 | | | | 1.51 | | 6.0 |
| Hydrolysable polyorganosiloxane | | 0.61 | 1.8 | 0.62 | 0.61 | 1.8 | 1.2 |
| Additive | | | | | 0.13 | | |
| Total (gms) | | 33.6 | 100 | 33.72 | 38.46 | 100 | 100 |
| Total filler (wt%) | | 95.34 | 95.4 | 95.284 | 95.34 | 95.4 | 95.4 |
| Total filler (vol %) | | 85.34 | 85.4 | 85.175 | 85.05 | 85.4 | |
| Dispensability (g/min) | | 10.4 | 10.9 | 22.8 | 19.4 | 36 | 60.6 |
| Thermal conductivity (W/mK) (Hot disk) | | 13.0 | 12.1 | 12.16 | 14.15 | 12.73 | 14.03 |

Four different optimization runs for thermal conductive grease composition achieving high thermal conductivity and good dispensability are shown in Table 1.

When the irregular diamonds were used in the compositions (CE-1 and CE-2), low dispensability was observed, and compositions were not stable.

To improve the thermal conductivity, dispensability and stability of the thermal compositions, single crystal diamond along with other thermal conductive fillers were used (Table 1). As can be seen from table 1, examples 1 to 4 have thermal conductivity >12 W/mK with dispensability >19 g/min.

Ultra-high thermal conductive two-part addition curable thermal conductive compositions:
TIA2101GF is a commercial two-part silicone composition produced by Momentive performance Materials.

Two-part addition curable thermal conductive compositions were made with different filler percentage loading and achieved ultra-high thermal conductivity (>20 W/mK) with very good and stable dispensability (>20 g/min), and good thermal stability (Table 2). By mixing 1:1 ratio of part-A and part-B, it was cured at 70 °C for 1 h. The cured samples H/Vi ratios are in the range of 0.4-0.9. F-1 is 1.5 wt% solution of bis-{(1,1-dimethyl-2-propynyl)oxy}dimethylsilane in organohydrogenpolysiloxane cross-linker (viscosity 0.02 Pa·s). G-1 is a platinum-based catalyst: 18 wt% solution of 2% platinum amount vinyl dimer complex in monovinyl terminated organopolysiloxane (viscosity 0.02 Pa·s). The platinum amount may be 7 ppm in compositions.

**[Table 2A]**

| | | **(wt%)** | | | | | | | | | |
|---|---|---|---|---|---|---|---|---|---|---|---|
| | | **Ex-5** | | **Ex-6** | | **Ex-7** | | **Ex-8** | | **Ex-9** | |
| | | **Part A** | **Part B** | **Part A** | **Part B** | **Part A** | **Part B** | **Part A** | **Part B** | **Part A** | **Part B** |
| Polysiloxane | A-1b | 0.98 | 0.98 | 1.00 | 1.00 | 1.31 | 1.31 | 0.98 | 0.98 | 0.98 | 0.98 |
| | A-2b | 0.32 | 0.10 | 1.207 | 1.107 | 1.87 | 1.75 | 0.32 | 0.10 | 0.32 | 0.10 |
| Crosslinker | B-1 | | 0.22 | | 0.2 | | 0.13 | | 0.22 | | 0.22 |
| Thermal conductivity enhancing agent | C-4 | | | 45.0 | 45.0 | 48.5 | 48.5 | | | | |
| | C-4a | 24.09 | 24.09 | | | | | 24.09 | 24.09 | 24.09 | 24.09 |
| | C-5a | 9.36 | 9.36 | 15.0 | 15.0 | 15.0 | 15.0 | 9.36 | 9.36 | 9.36 | 9.36 |
| | C-5b | 4.16 | 4.16 | 10.0 | 10.0 | 5.0 | 5.0 | 4.16 | 4.16 | 4.16 | 4.16 |
| | C-5c | 8.55 | 8.55 | 20.75 | 20.75 | 21.03 | 21.03 | 8.55 | 8.55 | 8.55 | 8.55 |
| | C-6 | | | 5.75 | 5.75 | 6.0 | 6.0 | 1.94 | 1.94 | 2.91 | 2.91 |
| Hydrolysable polyorganosiloxane | D-1 | | | 1.00 | 1.00 | 1.00 | 1.00 | | | | |
| | D-2 | 0.37 | 0.37 | | | | | 0.37 | 0.37 | 0.37 | 0.37 |
| Reaction Inhibitor | F-1 | | 0.21 | | 0.20 | | 0.283 | | 0.21 | | 0.21 |
| Pt catalyst | G-1 | 0.18 | | 0.286 | | 0.285 | | 0.18 | | 0.18 | |
| H/Vi ratio | | 0.52 | | 0.56 | | 0.40 | | 0.52 | | 0.52 | |
| Total (gms) | | 48.03 | 48.06 | 100 | 100 | 100 | 100 | 50 | 50 | 50.97 | 50.97 |
| Total filler (wt%) | | 96.05 | 96.05 | 96.5 | 96.5 | 95.53 | 95.53 | 96.2 | 96.2 | 96.27 | 96.27 |
| Total filler (vol %) | | 87.65 | 87.53 | 88.44 | 88.44 | 85.52 | 85.52 | 87.92 | 87.8 | 88.05 | 87.93 |

**[Table 2B]**

| | **TIA2101GF** | | **Ex-5** | | **Ex-6** | | **Ex-7** | | **Ex-8** | | **Ex-9** | |
|---|---|---|---|---|---|---|---|---|---|---|---|---|
| | **Part A** | **Part B** | **Part A** | **Part B** | **Part A** | **Part B** | **Part A** | **Part B** | **Part A** | **Part B** | **Part A** | **Part B** |
| Viscosity (Pa·s) | 630 | 590 | | | 617 | 542 | 197 | 195 | 580 | 550 | 538 | 516 |
| Dispensability (g/min) | 30 | 30 | 2 | 4 | 21.6 | 22.3 | 106 | 100 | 13 | 13 | 14 | 14 |
| Thermal conductivity (W/mK) (Hot disk) | 10.2 | | 18 | 18 | 20.2 | 20.4 | 12.5 | 12.8 | 17.7 | 17.7 | 18.3 | 18.3 |
| Thermal Conductivity (W/mK) (ASTM D5470) | | | | | 20.7 | 20.1 | 15.7 | 15.3 | | | | |
| TR (Kmm²/W) (ASTM D5470) | | | 16 | | 20.76 | | 28.57 | | 16 | | 16 | |
| Initial Hardness (Shore E) after curing at 70°C for 1h | 10 | | 85 | | 21 | | 0 | | 75 | | 80 | |
| Specific gravity | 3.1 | | 3.1 | 3.1 | 3.1 | 3.1 | 3.1 | 3.1 | 3.1 | 3.1 | 3.1 | 3.1 |
| BLT(µm) | 250 | | 270 | 270 | 245 | 255 | 245 | 255 | 270 | 270 | 270 | 270 |
| Volume resistivity (ohm-cm) | 3×10¹³ | | 3×10¹¹ | | 1.18×10¹¹ | | 1.13×10¹¹ | | 3×10¹¹ | | 3×10¹¹ | |
| Dielectric strength (KV/mm) | 15 | | 14 | | 12.7 | | 12.5 | | 14 | | 14 | |

As can be seen from Table 2, examples 5 to 9 show thermal conductivity >12 W/mK with dispensability >13 g/min and also showed less hardness buildup at high temperature of 150 °C and showed stable dispensability after aging.

As described in Fig. 1, vertical stability performance under thermal shock after 500 h (0.5 mm, 1 mm and 2 mm gap, bottom to top) under thermal shock (-40 °C to 150 °C) for examples 6, showed very good vertical stability.

Ultra-high thermal conductive cross-linked silicone gel compositions:

**[Table 3]**

| Components (wt%) | | **Ex. 10** | **Ex. 11** | **Ex. 12** | **Ex. 13** | **Ex. 14** |
|---|---|---|---|---|---|---|
| Divinyl terminated organopolysiloxane | A-1a | 1.5 | 1.75 | 1.65 | 1.75 | 1.75 |
| Cross-linked silicone gel | X-1 | 1.0 | 1.00 | 1.1 | 1.00 | 1.00 |
| Thermal conductive filler | C-4 | 45.0 | 48.5 | 45.0 | | 48.5 |
| | C-4a | | | | 48.5 | |
| | C-5a | 15.0 | 15.0 | 15.0 | 15.0 | 15.0 |
| | C-5b | 10.0 | 5.0 | 10.0 | 5.0 | 5.0 |
| | C-5c | 20.75 | 20.95 | 20.75 | 20.95 | 20.95 |
| | C-6 | 5.75 | 6.0 | 5.75 | 6.0 | 6.0 |
| Hydrolysable polyorganosiloxane | D-1 | 1.0 | 1.50 | 1.1 | 1.50 | 1.50 |
| Total (gms) | | 100 | 100 | 100 | 100 | 100 |
| Total filler (wt%) | | 96.5 | 95.45 | 96.16 | 95.45 | 95.45 |
| Total filler (vol %) | | 88.44 | 85.25 | 87.43 | 85.25 | 85.25 |
| Dispensability (g/min) | | 6.43 | 20.0 | 9.24 | 14.61 | 18.65 |
| TC (W/mK) (Hot Disk) | | 18.85 | 15.83 | 17.64 | 14.13 | 15.15 |
| TC (W/mK) (ASTM D5470) | | 21.07 | 17.41 | 18.56 | 16.06 | 16.31 |
| TR (Kmm²/W) (ASTM D5470) | | 33.3 | 20.74 | 17.14 | 18.05 | 21.1 |
| BLT (µm) | | 250 | 267 | 259 | 207 | 264 |
| Viscosity (Pa·s) | | 1309 | 858 | 1380 | 913 | 826 |
| Thixo index (0.1/1 s⁻¹) | | | 2.16 | 2.21 | 2.35 | 2.15 |
| Hardness (Shore E) | | 6 | 0 | 0 | 0 | 0 |

As can be seen from Table 3, examples 10 to 14 show thermal conductivity >14 W/mK with dispensability >12 g/min and hardness (shore E) was within the 10 at 150 °C even after 1000 h of aging and showed stable dispensability.

What has been described above includes examples of the present specification. It is, of course, not possible to describe every conceivable combination of components or methodologies for purposes of describing the present specification, but one of ordinary skill in the art may recognize that many further combinations and permutations of the present specification are possible. Accordingly, the present specification is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

The foregoing description identifies various, non-limiting embodiments of thermal conductive gel composition. Modifications may occur to those skilled in the art and to those who may make and use the invention. The disclosed embodiments are merely for illustrative purposes and not intended to limit the scope of the invention or the subject matter set forth in the claims.

## Claims

1. A composition comprising a polymer and at least one thermal conductivity enhancing agent, wherein the composition has a dispensability of more than 12 gms per minute as determined using automated dispenser Nordson EFD using 30 cc syringe with 2 mm opening at 90 psi and thermal conductivity of more than 12 W/mK as determined by the hot disk method or ASTM D5470 method.

2. The composition of claim 1 wherein the polymer is a silicone polymer.

3. The composition of claim 2 wherein the silicone polymer comprises
(i) an alkenyl-functionalized diorganopolysiloxane of formula (Ia)
M¹ₐM²_{b}D¹_{c}D²_{d}T¹ₑT²_{f}Q_{g} (Ia)
wherein:
M¹ = R¹R²R³SiO_{1/2}
M² = R⁴R⁵R⁶SiO_{1/2}
D¹ = R⁷R⁸SiO_{2/2}
D² = R⁹R¹⁰SiO_{2/2}
T¹ = R¹¹SiO_{3/2}
T² = R¹²SiO_{3/2}
Q = SiO_{4/2}
where R², R³, R⁴, R⁵, R⁶, R⁸, R⁹, R¹⁰, R¹² are each independently selected from an aliphatic, aromatic, and fluoro monovalent hydrocarbon groups having from 1 to 60 carbon atoms or alkoxy groups;
R¹, R⁷, R¹¹ are each independently selected from an aliphatic, aromatic, or fluoro monovalent hydrocarbon having from 1 to 60 carbon atoms and containing at least one terminal olefin bond; and
the subscripts a, b, c, d, e, f, and g are zero or a positive integer subject to the following limitations: 1≤a+b+c+d+e+f+g ≤6000, and
a+c+e≥1;
and
(ii) a hydrogen-functionalized organopolysiloxane of formula (Ib)
M¹_{a'}M²_{b'}D¹_{c'}D²_{d'}T¹_{e'}T²_{f'}Q_{g'} (1b)
wherein:
M¹ = R¹³R¹⁴R¹⁵SiO_{1/2}
M² = R¹⁶R¹⁷R¹⁸SiO_{1/2}
D¹ = R¹⁹R²⁰SiO_{2/2}
D² = R²¹R²²SiO_{2/2}
T¹ = R²³SiO_{3/2}
T² = R²⁴SiO_{3/2}
Q = SiO_{4/2}
where R¹⁴, R¹⁵, R¹⁶, R¹⁷, R¹⁸, R²⁰, R²¹, R²², R²⁴ are aliphatic, aromatic or fluoro monovalent hydrocarbon groups having from 1 to 60 carbon atoms;
R¹³, R¹⁹, R²³ are hydrogen;
the subscript a', b', c', d', e', f', and g' are zero or a positive integer subject to the following limitations: 1≤a'+b'+c'+d'+e'+f'+g' ≤6000, and a'+c'+e' ≥ 1;
with the proviso that when a'+c'+e' =1 then a+c+e >1 and when a+c+e =1 then a'+c'+e' >1;
or a crosslinked product of (i) and (ii).

4. The composition of any one of claims 1 to 3 wherein the composition comprises a first thermal conductivity enhancing agent and a second thermal conductivity enhancing agent.

5. The composition of claim 4, wherein the first thermal conductivity enhancing agent is diamond.

6. The composition of claim 4 wherein the second thermal conductivity enhancing agent is selected from a group consisting of aluminum oxide, zinc oxide, boron nitride, SiC, and aluminum nitride.

7. The composition of any one of the claims 1 to 6 wherein the composition has a viscosity of more than 100 Pa·s.

8. The composition of any one of the claims 1 to 6 wherein the polymer is present in an amount in the range of 1 to 6 wt% of the composition.

9. The composition of any one of the claims 1 to 6 wherein the composition has a gradient in change in thermal resistance with respect to change in a thickness of 100 K mm²/W or less.

10. The composition of any one of the claims 1 to 6 wherein the composition has a shore E hardness of 0 to 90.

11. The composition of any one of the claims 1 to 6 wherein the composition has a bond line thickness (BLT) of 150 µm or more.

12. The composition of any one of the claims 1 to 6 wherein the composition has a volume resistivity of 1 × 10¹⁰ Ω·cm or more.

13. The composition of any one of the claims 1 to 6 wherein the composition has a dielectric strength of 5 kV/mm or more.

14. The composition of any one of claims 1 to 13, wherein the composition is one part cross-linked silicone gel composition, two part composition or a grease composition.
